# EUROPÄISCHE PATENTSCHRIFT

(11) **EP 2 274 902 B1**
(45) Veröffentlichungstag und Bekanntmachung des Hinweises auf die Patenterteilung: **19.07.2017**
(21) Anmeldenummer: 09732635.9
(22) Anmeldetag: 18.02.2009
(51) Int. Cl.: H04M 3/493, H04L 29/12, H04L 29/06

(54) **UNIVERSELLE ADRESSIERUNG EINES KOMMUNIKATIONSPARTNERS ÜBER TRANSPARENTE STATISCHE ZUORDNUNG EINER RUFNUMMER**
UNIVERSAL ADDRESSING OF A COMMUNICATION PARTNER BY MEANS OF TRANSPARENT STATIC PROVISION OF A CALL NUMBER
ADRESSAGE UNIVERSEL D'UN CORRESPONDANT PAR AFFECTATION STATIQUE TRANSPARENTE D'UN NUMÉRO D'APPEL

(30) Priorität: 15.04.2008 DE 102008019033
(43) Veröffentlichungstag der Anmeldung: 19.01.2011
(73) Patentinhaber: Deutsche Telekom AG, 53113 Bonn (DE)
(72) Erfinder: KRAMARZ-VON KOHOUT, Gerhard, 53111 Bonn (DE); FISCHER, Edwin, 50678 Köln (DE)
(74) Vertreter: Wißgott, Torben
(86) Internationale Anmeldenummer: PCT/EP2009/001159
(87) Internationale Veröffentlichungsnummer: WO 2009/127289

(56) Entgegenhaltungen:
- EP-A- 1 161 059
- WO-A-2007/129225
- US-A1- 2008 064 350

## Beschreibung

Die Erfindung betrifft ein System, welches ein universelles Adressierungsverfahren zum Aufbau einer Kommunikationsverbindung zwischen einem anrufenden A-Teilnehmer und einem anzurufendem B-Teilnehmer eines Kommunikationssystems, insbesondere eines Telekommunikationsfestnetzes und / oder eines Mobilfunknetzes und / oder eines internetprotokollbasierten Computernetzwerkes oder einer Kombination dieser Netze, bereitstellt, bei dem aus einer den anzurufenden B-Teilnehmer eindeutig identifizierenden Zeichenfolge mittels einer eindeutigen Abbildung eine Ziffernfolge ermittelt und eine Verbindung unter Verwendung einer aus dieser Ziffernfolge abgeleiteten Rufnummer des B-Teilnehmers aufgebaut wird.

Ein Verfahren dieser Art ist in der US 2008/064350 A1 beschrieben. Allgemein ist es bekannt, eine Kommunikationsverbindung zwischen einem anrufendem A-Teilnehmer und einem anzurufenden B-Teilnehmer durch Eingabe einer Rufnummer des B-Teilnehmers auszulösen. Die Schrift US 2008/064350 lehrt zudem eine Möglichkeit, eine Telekommunikationsverbindung zu einem anzurufenden B-Teilnehmer herzustellen, von dem lediglich eine beliebige Zeichenfolge als Adresse bekannt ist, beispielsweise ein Kosename. Dabei wird jeder Kosename zunächst in einen numerischen Code konvertiert. Dieser ist jedoch keine gültige Telefonnummer, so dass ein weiterer Schrift erforderlich ist, um von dem Code zu einer Rufnummer zu gelangen. Dies erfolgt durch eine Zuordnung in einer Datenbank, welche für die Ermittlung der dem Kosenamen zugeordneten Rufnummer abgefragt wird. Somit ist das Verfahren der US 2008/064350 A1 zweistufig und erfordert zudem eine Datenbank, was zu entsprechenden Nachteilen führt.

Auch sind sogenannte Vanity-Rufnummern bekannt, bei denen es sich um sogenannte Wortwahl-Rufnummern handelt. Diese Vanity-Rufnummern sind Rufnummern, die mit Hilfe der Buchstabenwahl als Wort dargestellt werden. Dabei werden lediglich Buchstaben den Ziffern der Telefontastatur zugeordnet, so dass anstelle einer Rufnummer ein einprägsamer Begriff dargestellt werden kann. Die Zuordnung erfolgt auf Basis einer Empfehlung der Internationalen Fernmeldeunion (ITU). So entsprechen die Buchstaben A, B und C der Ziffer 2.

Da die Anzahl der Ziffern einer Rufnummer beschränkt ist (max. 15), stehen für die eigentliche Vanity-Zeichenfolge aufgrund der Ziffern für internationale Vorwahl und nationale Vorwahl / Service-Kennung wie 0700 nur recht wenige Zeichen (in der Regel 8) zur Verfügung. Diese Zeichen aus der Vanity-Zeichenfolge dürfen lediglich Ziffern oder Buchstaben sein. Sonderzeichen sind nicht zulässig. Zwischen Groß- und Kleinbuchstaben wird nicht unterschieden. Zusätzlich angehängte Zeichen (z.B. 0800-TELEKOMBONN) entsprechen nachgewählten Ziffern (BONN entspricht 2666), die in der Regel keinen Einfluss auf die Telekommunikationsverbindung haben.

Die der Vanity-Zeichenfolge entsprechende Rufnummer wird dem Antragsteller bei Registrierung durch den Regulierer, d.h. die zuständige Behörde für die Vergabe dieser Rufnummern, fest zugeordnet, damit eine Eindeutigkeit gewährleistet ist, so dass weitere Buchstabenkombinationen mit derselben zugeordneten Rufnummer nicht mehr zulässig sind.

In der Regel werden die Vanity-Rufnummern nur virtuell genutzt. Im zugehörigen Server kann der Inhaber der Vanity-Rufnummer dieser mehrere Rufnummern mobiler oder fester Telefonanschlüsse zuordnen, die über die Weiterleitungsregeln (z.B. Reihenfolge, zeitabhängig) die tatsächliche Erreichbarkeit nach Festlegung durch den Nutzer sicherstellen.

Die Vanity-Zeichenfolgen stellen eine statische Zuordnung zwischen Zeichenfolge und Rufnummer her.

Die Länge einer Vanity-Zeichenfolge ist beschränkt, auch der zulässige Zeichensatz ist beschränkt. Die Tastaturen der heutigen Endgeräte unterstützen in der Regel nur diesen Zeichensatz.

Allgemein erfolgt die Adressierung zudem stets dienstbezogen. Es war so z.B. lange nicht möglich, eine E-Mail-Adresse anzurufen (voice call).

Eine E-Mail-Adresse wie info@telekom.de konnte nicht unmittelbar zum Aufbau einer Telekommunikationssprachverbindung verwendet werden, auch nicht per Vanity-Rufnummern: "@" und "." finden sich nicht auf der Telefontastatur. Selbst diese recht kurze E-Mail-Adresse besteht bereits aus 15 Zeichen, d.h. deutlich mehr, als für eine Vanity-Zeichenverbindung zulässig ist.

Ebenso wenig lässt sich ein beliebig gewählter Name (Alias oder Nickname wie z.B. "Fritz_the_tiger") zum Aufbau einer Telekommunikationssprachverbindung verwenden.

Die internationale Patentanmeldung WO 2007/129225 A2 beschreibt demgegenüber ein Verfahren, bei dem ein Uniform Resource Loactor (URL) oder eine Emailadresse verwendet werden kann, um einen Teilnehmer von einem Mobiltelefon aus anzurufen. Dies erfolgt durch Abfrage einer Datenbank, in der zu jeder entsprechenden URL oder Emailadresse eine gültige Rufnummer hinterlegt ist, die dann gewählt wird. Diese Umsetzung erfolgt automatisch, d.h. vom Anrufer unbemerkt. Nachteilig ist auch hier, dass eine Datenbank aufgesetzt und gepflegt werden muss.

Die Aufgabe der Erfindung ist es, ein Verfahren der eingangs genannten Art derart weiter zu bilden, dass die Nachteile des Standes der Technik überwunden werden und ein Aufbau einer Kommunikationsverbindung ohne die genannten Beschränkungen möglich ist, insbesondere unter Verwendung beliebiger Zeichenfolgen wie beispielsweise einer E-Mail-Adresse.

Diese Aufgabe wird erfindungsgemäß durch ein Verfahren gemäß Anspruch 1 gelöst. Weitere vorteilhafte Ausgestaltungen der Erfindungen sind in den Unteransprüchen angegeben.

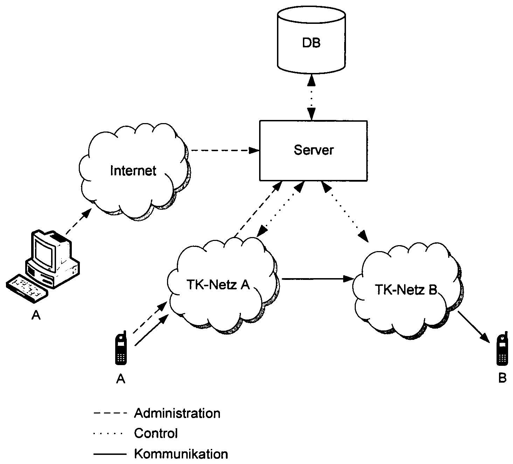

Besonders vorteilhaft ist bei dem Verfahren zum Aufbau einer Kommunikationsverbindung zwischen einem anrufenden A-Teilnehmer und einem anzurufendem B-Teilnehmer eines Kommunikationssystems, insbesondere eines Telekommunikationsfestnetzes und / oder eines Mobilfunknetzes und / oder eines internetprotokollbasierten Computernetzwerkes oder einer Kombination dieser Netze, dass aus einer den anzurufenden B-Teilnehmer eindeutig identifizierenden Zeichenfolge mittels einer eindeutigen Abbildung aus der Zeichenfolge eine Ziffernfolge ermittelt wird und eine Verbindung zu einer Rufnummer des B-Teilnehmers, die aus der Ziffernfolge abgeleitet wird, aufgebaut wird, wobei die Abbildung eine Hash-Funktion ist, mittels derer aus der Zeichenfolge eine Ziffernfolge ermittelt wird.

Durch diese eindeutige Ermittlung der Rufnummer aus einer den B-Teilnehmer eindeutig identifizierenden, jedoch an sich beliebig festlegbaren Zeichenfolge ist es somit möglich, eine Verbindung zu dieser Rufnummer aufzubauen.

Besonders vorteilhaft ist dabei, dass das erfindungsgemäße Verfahren ohne weiteres in bestehenden Telekommunikationsnetzen umgesetzt werden kann, weil insbesondere die Systematik der auf max. 15 beschränkten Anzahl der Ziffern einer Rufnummer unberührt bleibt.

Durch das erfindungsgemäße Verfahren ist es möglich, Adressen, die keinem existierenden Adressschema folgen, sondern aus unterschiedlichen Zeichen wie Großbuchstaben, Kleinbuchstaben, Ziffern, Sonderzeichen in beliebiger Anzahl bestehen, verwenden zu können. Der tatsächliche Name der Person aus Vorname und / oder Nachname, die E-Mail-Adresse dieser Person, ein Alias oder Nickname, beispielsweise auch ein Spitzname, ein Ordensname oder ein Künstlername, aber auch eine Zeichenfolge ohne erkennbare Bedeutung sind somit zulässige Adressen. Einer solchen Adresse kann erfindungsgemäß eine Rufnummer transparent und statisch zugeordnet werden. Die Zuordnung ist zum einen transparent, da die Zuordnung von Rufnummer zu Zeichenfolge für jedermann nachvollziehbar ist, und zum anderen statisch, da es zu einer Zeichenfolge genau eine Rufnummer gehört (in Abhängigkeit der spezifischen Implementierung des erfindungsgemäßen Verfahrens).

Wenn als Adresse die E-Mail-Adresse gewählt wird, ergibt sich zusätzlich der Vorteil, dass man über eine E-Mail-Adresse nicht nur per E-Mail, sondern nunmehr auch telefonisch erreichbar ist. Der Nutzer benötigt somit nur noch eine einzige Adresse sowohl für den E-Mail- als auch für den Telefonie-Service.

Vorzugsweise handelt es sich bei der den B-Teilnehmer eindeutig identifizierende Zeichenfolge um den Vornamen und/oder Zunamen und/oder eine E-Mail-Adresse und/oder einen Alias, insbesondere einen Spitznamen oder einen Künstlernamen oder einen Ordensnamen, oder um eine Kombination der vorgenannten Varianten.

In einer bevorzugten Ausführungsform des erfindungsgemäßen Verfahrens wird eine Kennung des A-Teilnehmers an das Kommunikationssystem netz- oder webbasiert übermittelt, wie beispielsweise die Rufnummer des A-Teilnehmers oder auch eine den A-Teilnehmer eindeutig identifizierende Zeichenfolge, wie beispielsweise dessen Vorname und / oder Zuname und / oder dessen E-Mail-Adresse und / oder dessen Alias und / oder IP-Adresse oder dergleichen, die geeignet ist, den A-Teilnehmer eindeutig zu identifizieren. Nach der Identifikation kann im Kommunikationssystem diejenige Rufnummer von A ermittelt werden, mit der der Aufbau der von A gewünschten Kommunikationsverbindung erfolgen soll.

Die Übermittlung der den B-Teilnehmer identifizierenden Zeichenfolge kann durch direkte Umsetzung in eine Rufnummer beispielsweise über eine Funktion des Telekommunikationsendgerätes des Anrufers (A-Teilnehmer) oder durch Übermittlung der Zeichenfolge über einen Datenkanal an das Telekommunikationssystem oder durch Übermittlung einer Nachricht an das Kommunikationssystem enthaltend diese Zeichenfolge erfolgen, beispielsweise per E-Mail, SMS, MMS, Instant Messaging (IM) oder dergleichen.

In einer besonders bevorzugten Ausführungsform besteht die Möglichkeit, dass bei einem fehlgeschlagenen oder abgelehnten Verbindungsaufbau eine Mitteilung an den B-Teilnehmer übermittelt wird, insbesondere kann eine solche Mitteilung eine Kennung des A-Teilnehmers und / oder Anrufdatum und Anrufuhrzeit enthalten. Insbesondere kann eine derartige Mitteilung an den B-Teilnehmer per SMS, MMS, Instant Messaging (IM), E-Mail oder dergleichen übermittelt werden.

Vorzugsweise sind zeitliche Beschränkungen oder Vorgaben für einen Verbindungsaufbau festlegbar, insbesondere sind vorzugsweise Zeiten festlegbar, in den kein oder nur ein Verbindungsaufbau mit bestimmten Kennungen erfolgt und / oder es können Uhrzeit / Datum für einen erstmaligen Versuch eines Verbindungsaufbaus vorgebbar sein.

Hierdurch ist es beispielsweise möglich, im Vorfeld einen Verbindungsaufbau für einen bestimmten Tag und eine bestimmte Uhrzeit, beispielsweise für einen Besprechungstermin zu vereinbaren und dem Kommunikationssystem vorzugeben, d.h. dass ein Verbindungsaufbau nicht zwingend in dem Moment der Übermittlung des Kommunikationsauftrages erfolgt, sondern zu einem späteren Zeitpunkt erfolgen kann.

In einer bevorzugten Ausführungsform des erfindungsgemäßen Verfahrens ist es möglich, dass auch Konferenzschaltungen mit einer beliebigen Zahl von Teilnehmern aufgebaut werden können.

Kern der Realisierung auf der Basis einer Abbildung mittels einer Funktion wie einer Hash-Funktion ist die Auswahl einer solchen Hash-Funktion H, die einer Adresse aus einem beliebigen Zeichensatz in beliebiger Länge eine 8-stellige Dezimalzahl (ggf. mit führenden Nullen wie etwa 00023456) zuordnet.

Auszugehen ist dabei beispielsweise ebenso wie im Fall der o.a. Vanity-Rufnummern von 8 Ziffern, die "zur freien Auswahl" zur Verfügung stehen. Diese z.B. acht Ziffern identifizieren den B-Teilnehmer und sind, um eine Rufnummer zu bilden, entsprechend zu ergänzen, beispielsweise um die vorangestellten Ziffern für die nationale / internationale Vorwahl und / oder für eine Servicekennung wie z.B. +49777 oder 0777.

In Abhängigkeit der Anzahl der Ziffern für die nationale / internationale Vorwahl und für die Servicekennung kann die o.a. Dezimalzahl statt 8 Ziffern auch entsprechend mehr oder weniger Ziffern enthalten.

Nach dem vorstehenden Beispiel kann somit die Rufnummer +4977700023456 aus einer den anzurufenden B-Teilnehmer identifizierenden Zeichenfolge mittels der Hash-Funktion H ermittelt werden. Sodann wird eine entsprechende Verbindung zu dieser Rufnummer aufgebaut.

In der Regel wird der B-Teilnehmer diese Rufnummer ähnlich den Vanity-Rufnummern nur virtuell nutzen. Im zugehörigen Kommunikationssystem kann der B-Teilnehmer seiner erfindungsgemäßen Rufnummer mehrere Rufnummern mobiler oder fester Telefonanschlüsse zuordnen, die über Weiterleitungsregeln (z.B. Reihenfolge, zeitabhängig) die tatsächliche Erreichbarkeit nach Festlegung durch ihn sicherstellen.

Eine Hash-Funktion ist eine Funktion, die zu einer Eingabe aus einer (üblicherweise) großen Quellmenge genau eine Ausgabe aus einer (im Allgemeinen) kleineren Zielmenge (die Hashwerte, beispielsweise eine Teilmenge der natürlichen Zahlen) erzeugt.

Hash-Funktionen unterscheiden sich in der Definitionsmenge ihrer Eingaben, der Zielmenge der möglichen Ausgaben und im Einfluss von Mustern und Ähnlichkeiten verschiedener Eingaben auf die Ausgabe.

Eine gute Hash-Funktion zeichnet sich dadurch aus, dass sie für die Eingaben, für die sie entworfen wurde, wenig Kollisionen erzeugt. Dadurch können die meisten Eingaben an Hand ihres Hashwertes unterschieden werden.

Die Hash-Funktion H habe hier nur die Eigenschaft, als Zielmenge die Dezimalzahlen entsprechender Länge, wobei führende Nullen zulässig sein können, und als Definitionsmenge Zeichenfolgen in gewünschter maximaler Länge (z.B. 100 Zeichen oder auch "beliebig lang") aus einem gewünschten Zeichensatz (z.B. ASCII als 7-Bit-Kodierung mit 128 Zeichen oder UTF-8 als 8-Bit-Kodierung mit 256 Zeichen) zu verwenden.

So könnte H beispielsweise eine hexadezimale Zahl (ein 8-Bit-Zeichen liegt hexadezimal geschrieben zwischen 00 und FF, mehrere solcher Zeichen führen entsprechend zu einer längeren Hexadezimalzahl) in die zugehörige dezimale Zahl umwandeln (01 FF entspricht beispielsweise dezimal 256+255=511). Die letzten 8 Ziffern dieser sich auf diese Weise ergebenden Dezimalzahl ergeben dann den Hashwert H, der die Rufnummer bzw. deren individuellen Anteil darstellt. Zu dieser Rufnummer wird der Aufbau einer Telekommunikationsverbindung ausgelöst. Dieses Beispiel soll lediglich das Prinzip einer Hash-Funktion beispielhaft besser verständlich machen. Alternativ wäre auch die Wahl einer anderen Funktion H möglich.

Um nun eine solche beliebige Zeichenfolge, wie beispielsweise
- eine E-Mail-Adresse wie "info@telekom.de",
- eine auf den Nutzer hinweisende Zeichenkette wie "Fritz Müller aus 53227 Bonn" oder
- ein Alias wie "Fritz the tiger"
als Zieladresse für einen Rufaufbau verwenden zu können, wird nun zunächst die Funktion H auf die Zeichenfolge angewandt, so dass sich als Hashwert eine Dezimalzahl (z.B. 76984523) ergibt. Diese Dezimalzahl kann dann zu einer Rufnummer ausgebaut werden, indem die Ziffern für internationale Vorwahl und nationale Vorwahl / Service-Kennung ergänzt werden, etwa wie folgt +49 777 76984523.

Diese Zuordnung einer Telefonnummer zu einer Zeichenfolge ist transparent und statisch. Sie ist transparent, weil jedermann, der H kennt und nutzen kann, die Zuordnung herstellen kann. Sie ist statisch, weil es zu einer Zeichenfolge (bei vorgegebenem H und vorgegebener internationaler Vorwahl und nationaler Vorwahl / Service-Kennung) nur eine einzige zugehörige und damit eindeutige Telefonnummer gibt.

Es ist in der Regel in Abhängigkeit von der spezifischen Hash-Funktion H nicht möglich, zu einer vorgegebenen Telefonnummer eine passende Zeichenfolge zu finden, die bei Anwendung von H in diese Telefonnummer überführt wird.

Diese Rufnummer ist demjenigen zugeordnet, der sich diese Rufnummer hat reservieren lassen. Eine vorherige Reservierung / Anmeldung zum Dienst ist, wie auch beim Vanity-Service, zwingend erforderlich, da eine Hash-Funktion H grundsätzlich nicht kollisionsfrei ist, d.h. unterschiedliche Zeichenfolgen könnten denselben Hashwert erhalten. Wenn der Hashwert 8-stellig ist, könnten aber immerhin bis zu 100.000.000 B-Teilnehmer diesen Dienst nutzen und eindeutig identifiziert werden, da es 100.000.000 8-stellige Dezimalzahlen und dementsprechend viele verschiedene Rufnummern gibt.

Durch Variation der internationalen Vorwahl bzw. der diesem Dienst zugewiesenen nationalen Vorwahl / Service-Kennungen kann die mögliche Maximalzahl an Teilnehmern noch deutlich gesteigert werden.

Zur Unterscheidung von solchen Zeichenfolgen und Rufnummern sollten vorzugsweise keine Rufnummern bzw. numerischen Zeichenfolgen in der Ausgangsadressierung als Alias oder Nickname verwendet werden, wenngleich auch diese Möglichkeit grundsätzlich gegeben ist.

Nachfolgend werden verschiedenen Ausprägungen, wie auf der Basis einer gegebenen Hash-Funktion H eine Umsetzung einer Zeichenfolge in eine Rufnummer und der Aufbau einer Telekommunikationsverbindung erfolgen kann, dargestellt.

Vorzugsweise erfolgt die Ermittlung der Ziffernfolge aus der Zeichenfolge mittels des Telekommunikationsendgerätes des anrufenden A-Teilnehmers oder indem die Zeichenfolge an das Kommunikationssystem übermittelt wird und dann seitens des Kommunikationssystems die Ermittlung der Ziffernfolge aus der Zeichenfolge erfolgt, die als Basis der Rufnummer dient.

### Fall 1: Implementierung "offline"

Hierzu muss die ausgewählte Hash-Funktion auf dem Telekommunikationsendgerät, auf der ggf. zugehörigen Chipkarte (z.B. SIM) oder einem eigenständigen (beispielsweise taschenrechner- oder PDA-ähnlichen) Zusatzgerät, das ggf. speziell nur für diesen Zweck, also nur zur Anwendung der Funktion H ausgelegt ist, implementiert sein. Das Telekommunikationsendgerät bzw. das Zusatzgerät müssen zudem Eingabemöglichkeit für die Zeichen des gewünschten Zeichensatzes bieten.

Nach Eingabe der Zeichenfolge müssen dann Aufruf und Anwendung der Hash-Funktion H möglich sein. Aus dem Hashwert kann der Nutzer manuell bzw. das Telekommunikationsendgerät / Zusatzgerät automatisch die zu wählende Rufnummer generieren, in dem die notwendigen Ziffern für internationale Vorwahl und nationale Vorwahl / Service-Kennung vorangestellt werden. Auf Basis dieser Rufnummer kann der Aufbau der Telekommunikationsverbindung erfolgen, in dem der Nutzer manuell oder das Telekommunikationsendgerät automatisch die Rufnummer wählen.

### Fall 2: Implementierung "online"

Alternativ erfolgt die Ermittlung der Ziffernfolge als Basis der Rufnummer mittels eines Diensteservers, über den die Kommunikationsverbindung aufgebaut wird, insbesondere über einen Server innerhalb des Kommunikationssystems. Damit der Diensteserver eine solche Kommunikationsverbindung aufbauen kann, muss dieser über die notwendigen Anbindungen an die zu beteiligenden Kommunikationsnetze und Kommunikationsprotokolle verfügen..

Die Benutzerschnittstelle für die A-/B-Teilnehmer zu diesem Server ist telekommunikationsnetz- und/oder webbasiert.

Eine netzbasierte Benutzerschnittstelle nutzt die Anbindung des Servers an ein Telekommunikationsnetz bzw. mehrere Telekommunikationsnetze, so dass der Nutzer über eine Sprachverbindung und / oder Datenverbindung (z.B. mittels SMS) die von ihm gewünschten Daten an den Server übermitteln kann.

Eine webbasierte Benutzerschnittstelle nutzt die Anbindung des Servers an das Internet, so dass der Benutzer beispielsweise mit einem an das Internet angeschlossenen PC und entsprechender Browser-Software die von ihm gewünschten Daten an den Server übermitteln kann. Um Missbrauch zu vermeiden, bedarf es hier in der Regel eines Accountes mit Benutzername und eines Passwortes oder einer PIN, d.h. einer persönlichen Identifikationsnummer.

In der Online-Implementierung ist die Hash-Funktion nicht beim Nutzer, d.h. beim anrufenden A-Teilnehmer in dessen Telekommunikationsendgerät bzw. Zusatzgerät, sondern im Diensteserver implementiert.

Beide Implementierungsvarianten können auch parallel betrieben werden, so dass manche Nutzer Endgeräte mit implementierter Hash-Funktion nutzen und manche Nutzer sich des Diensteservers bedienen können.

Um sich des Diensteservers bedienen zu können, muss der Nutzer sich anmelden und die Zeichenfolge, die er anwählen möchte, dem Diensteserver übermitteln. Dies kann auf unterschiedlichen Kommunikationswegen erfolgen:
- per Webportal des Diensteservers:
   Der Nutzer (A-Teilnehmer) gibt ein, d.h. es wird mittels einer Eingabeschnittstelle über das Internet an den Server übermittelt:
      a) seine eigene Rufnummer / Zeichenfolge,
      b) die Rufnummer / Zeichenfolge zur Identifikation des gewünschten Telekommunikationspartners (B-Teilnehmer).
   Der Diensteserver wendet auf die eingegebenen Zeichenfolgen die Hash-Funktion H an, ermittelt die zugehörigen Rufnummern und stellt auf Basis dieser Rufnummern eine Telekommunikationsverbindung zwischen dem A-Teilnehmer und seinem Telekommunikationspartner (B-Teilnehmer) her.
   Durch eine Personalisierung des Portals (mittels Cookies, Anmeldung) kann die erneute Eingabe der eigenen Rufnummer / Zeichenfolge entfallen.
- per Sprachportal des Diensteservers:
   Der Nutzer (A-Teilnehmer) gibt die Rufnummer / Zeichenfolge des gewünschten Telekommunikationspartners an über eine Schnittstelle, die eine Identifikation und Übersetzung von Spracheingaben ermöglicht. Zudem gibt der A-Teilnehmer seine eigene Rufnummer / Zeichenfolge an (falls seine eigene Rufnummer nicht bereits per CLI (Calling Line Identification, Rufnummerübermittlung) übermittelt wurde). Der Diensteserver wendet auf die angegebenen Zeichenfolgen die Hash-Funktion H an, ermittelt die zugehörigen Rufnummer(n) und stellt auf Basis dieser Rufnummer(n) eine Telekommunikationsverbindung zwischen dem A-Teilnehmer und dem B-Teilnehmer, d.h. dem gewünschten Telekommunikationspartner, her.
- per SMS an den Diensteserver:
   Der A-Teilnehmer (Nutzer des Dienstes) sendet eine SMS an den Diensteserver, beispielsweise über eine spezielle Kurzwahl wie 55555, mit dem exemplarischen Inhalt "call", gefolgt von einer Zeichenfolge.
   Der Diensteserver wertet die erhaltene SMS inklusive Absenderrufnummer (CLI Calling Line Identification) aus, wendet auf die Zeichenfolge die (im Diensteserver implementierte) Hash-Funktion H an und kann auf Basis dieser beiden Rufnummern eine Telekommunikationsverbindung zwischen dem Nutzer (A-Teilnehmer) und dem gewünschten Telekommunikationspartner (B-Teilnehmer) herstellen.

In einer weiteren Ausprägung kann die SMS zusätzlich die Parameter date (Datum) und time (Uhrzeit) enthalten, so dass der Nutzer auf Wunsch auch Datum und Uhrzeit vorgeben kann, wann die Telekommunikationsverbindung aufgebaut werden soll. Wenn die SMS diese Parameter nicht enthält, wird die Telekommunikationsverbindung sofort aufgebaut.

Via Sprachportal bzw. via SMS ist somit die Nutzung des Dienstes auch dann möglich, wenn ein Internetzugriff temporär nicht möglich ist.

Neben diesen Ausführungsformen auf drei unterschiedlichen Kommunikationswegen sind weitere Ausprägungen möglich:
- Konferenz mit mehr als zwei Teilnehmern
- Call oder Konferenz initiiert durch einen Dritten

Hierzu müssen für eine Dienstimplementierung die Eingabemöglichkeiten im Webportal oder Sprachportal entsprechend erweitert werden.

Für eine Dienstimplementierung über SMS muss die Syntax erweitert werden, beispielsweise wie folgt:
- Konferenz
   call Zeichenfolge1<separator>Zeichenfolge2<separator>... <separator>Zeichenfolge_n
- Call oder Konferenz durch Dritten
   call Zeichenfolgel1<separator>Zeichenfolge2<separator>
   oder
   call Zeichenfolge1<separator>Zeichenfolge2<separator>...
   <separator>Zeichenfolge_n<separator>

Unter <separator> ist ein für diesen Dienst definierte Zeichenfolge zu verstehen, mit deren Hilfe die Auswertbarkeit der verschiedenen Bestandteile des SMS-Inhaltes ermöglicht wird (ähnlich der Bedeutung des Zeichens "@" zur Trennung des lokalen und globalen Anteils einer E-Mail-Adresse). Die <separator> Zeichenfolge darf nicht in der eigentllichen Zeichenfolge für die Adressierung eines Kommunikationsteilnehmers vorkommen; Beispiel: "#" als <separator>, somit "call Fritz_the_tiger#maxmeierbonn#".

Ein <separator> am Ende der letzten Zeichenfolge zeigt hier dem System an, dass der Call (Anruf) nicht vom Absender der SMS, sondern von der letzten, aus Zeichenfolge2 bzw. Zeichenfolge_n abgeleiteten Rufnummer aufgebaut werden soll.

Um Missbrauch zu vermeiden, erfolgt die Abrechnung solcher Calls bevorzugt über den Absender der SMS (bzw. über den angemeldeten Nutzer des Webportals bzw. über den Anrufer des Sprachportals).

Beispiel: "#" als <separator>, somit
"call fritz the tiger#meier@telekom.de#02289361234".

Eine Adresse wie "maxmeier#bonn" wäre bei einer Festlegung von # als Separator nicht zulässig.

Mit der obigen Zeichenfolge wird somit über den erfindungsgemäßen Dienst eine Konferenz mit den folgenden Konferenzteilnehmern aufgebaut:
- Anrufer (A-Teilnehmer) (entspricht dem Absender obiger Zeichnfolge)
- 1. Anzurufender (1. B-Teilnehmer) mit dem Alias "fritz_the_tiger"
- 2. Anzurufender (2. B-Teilnehmer) mit der Email meier@telekom.de
- 3. Anzurufender (3. B-Teilnehmer) mit der Rufnummer 02289361234

Ein Ausführungsbeispiel der Erfindung ist in der Figur dargestellt und wird nachfolgend erläutert.

In der Figur ist die Kommunikationsverbindung dargestellt durch durchgezogene Linien, während durch gestrichelte Linien die Administration und durch gepunktete Linien Kontrollverbindungen dargestellt sind.

Im dargestellten Beispiel handelt es sich bei dem TK-Netz A um ein Mobilfunknetz. Bei dem Telekommunikationsnetz TK-Netz B, in das das B-Teilnehmer-Endgerät B des gewünschten Gesprächspartners B eingebucht ist, kann es sich ebenfalls um dasselbe oder ein anderes Mobilfunknetz handeln. Die Erfindung ist jedoch nicht auf das dargestellte Beispiel von Mobilfunkteilnehmern A und B beschränkt, vielmehr kann es sich bei den TK-Netzen A und B um Mobilfunknetze, Festnetze oder auch das Internet handeln.

Zum Aufbau einer Kommunikationsverbindung vom Anrufer A zum Angerufenen B, d.h. vom A-Teilnehmer zum B-Teilnehmer, wird vom A-Teilnehmer mittels seines Endgerätes A die den B-Teilnehmer identifizierende Zeichenfolge an das Telekommunikationsnetz TK-Netz A übermittelt. Das A-Teilnehmer-Endgerät A ist dabei in das Telekommunikationsnetz TK-Netz A eingebucht.

Die Übermittlung dieser den B-Teilnehmer identifizierenden Zeichenfolge kann über das Telekommunikationsendgerät A des Anrufers (A-Teilnehmer) durch direkte Eingabe der Zeichenfolge oder durch Übermittlung einer diese Zeichenfolge enthaltenden Nachricht an das Kommunikationssystem erfolgen, beispielsweise per E-Mail, SMS, MMS, Instant Messaging oder dergleichen, d.h. im dargestellten Beispiel durch Übermittlung über das TK-Netz A an den in das Kommunikationssystem integrierten Server.

Als Zeichenfolge kommen dabei in Betracht beispielsweise der tatsächliche Name der Person bestehend aus Vorname und/oder Nachname oder die E-Mail-Adresse dieser Person oder ein Alias oder Nickname, beispielsweise auch ein Spitzname, ein Ordensname oder ein Künstlername, aber auch eine Zeichenfolge ohne erkennbare Bedeutung. Die Zeichenfolge kann aus Groß-und/oder Kleinbuchstaben bestehen, sowie Sonderzeichen enthalten.

Das gesamte Kommunikationssystem verfügt über einen Server, der mit einer Datenbank DB gekoppelt ist. Die den B-Teilnehmer identifizierende Zeichenfolge wird in Form einer Anfrage vom Telekommunikationsnetz TK-Netz A an den Server übergeben, der mittels einer Zuordnungsfunktion in Form einer Hashfunktion H den zugehörigen Hashwert ermittelt, d.h. die zu dieser Zeichenfolge korrespondierende Telefonnummer des B-Teilnehmers im Telekommunikationsnetz TK-Netz B ermittelt.

Um die eingegebene Zeichenfolge als Zieladresse für einen Rufaufbau verwenden zu können, wird also zunächst die Hash-Funktion H auf die Zeichenfolge angewandt, so dass sich als Hashwert eine Dezimalzahl wie z.B. 76984523 ergibt. Diese Dezimalzahl wird dann zu einer Rufnummer ausgebaut, indem die Ziffern für internationale Vorwahl und nationale Vorwahl bzw. TK-Netz-Kennung ergänzt werden, etwa wie folgt +49 777 76984523.

Diese Zuordnung einer Telefonnummer zu einer Zeichenfolge ist transparent und statisch. Sie ist transparent, weil jedermann, der H kennt und nutzen kann, die Zuordnung herstellen kann. Sie ist statisch, weil es zu einer Zeichenfolge (bei vorgegebenem H und vorgegebener internationaler Vorwahl und nationaler Vorwahl / Service-Kennung) nur eine einzige zugehörige und damit eindeutige Telefonnummer gibt.

Die Zuordnung erfolgt somit in besonders vorteilhafter und einfacher Weise mittels des Servers, der unter Anwendung des Algorithmus der Hash-Funktion beim Empfang der Zeichenfolge die zu dieser Zeichenfolge korrespondierende Rufnummer des anzurufenden B-Teilnehmers im TK-Netz B ermittelt.

Es ist in der Regel in Abhängigkeit von der spezifischen Hash-Funktion H nicht möglich, zu einer vorgegebenen Telefonnummer eine passende Zeichenfolge zu finden, die bei Anwendung von H in diese Telefonnummer überführt wird.

Diese Rufnummer ist demjenigen zugeordnet, der sich diese Rufnummer hat reservieren lassen. Eine vorherige Reservierung / Anmeldung zum Dienst ist zwingend erforderlich, da eine Hash-Funktion H grundsätzlich nicht kollisionsfrei ist, d.h. unterschiedliche Zeichenfolgen könnten denselben Hashwert erhalten. Wenn der Hashwert 8-stellig ist, könnten aber immerhin bis zu 100.000.000 B-Teilnehmer diesen Dienst nutzen und eindeutig identifiziert werden, da es 100.000.000 8-stellige Dezimalzahlen und dementsprechend viele verschiedene Rufnummern gibt. Zu diesem Zweck, d.h. zur Erfassung und Speicherung der registrierten Rufnummern, verfügt der Server über eine entsprechende Datenbank DB, wie dies in der Figur dargstellt ist.

Die Benutzerschnittstelle für den A-Teilnehmer zu diesem Server ist telekommunikationsnetz- und/oder webbasiert, d.h. über das Telekommunikationsnetz TK-Netz A sowie des weiteren über internetbasierte Schnittstellen mittels eines Computers A, wie dies in der Figur dargestellt ist.

Unter Verwendung der vom Server wie oben beschrieben ermittelten Telefonnummer des B-Teilnehmers kann dann die Kommunikationsverbindung zwischen A (Anrufer) und B (Angerufener) aufgebaut werden über die Telekommunikationsnetze TK-Netze A und B.

Der Diensteserver wendet auf die eingegebenen Zeichenfolgen die Hash-Funktion H an, ermittelt die zugehörigen Rufnummern und stellt auf Basis dieser Rufnummern eine Telekommunikationsverbindung zwischen dem A-Teilnehmer und seinem Telekommunikationspartner (B-Teilnehmer) her.

Wie in der Figur angedeutet, können auch Verbindungen von oder zu einem Endgerät unter Einbindung des Internets hergestellt werden, insbesondere kann es sich bei dem Endgerät, mittels dessen der Alias, d.h. die Kennungszeichenfolge des anzurufenden B-Teilnehmers übermittelt wird, wie in der Figur dargestellt, auch um einen mit dem Internet verbundenen Computer handeln.

Über die Administration des Servers innerhalb des Kommunikationssystems besteht auch die nicht dargestellte Möglichkeit des Aufbaus einer Konferenzschaltung mit mehr als zwei Teilnehmern.

## Patentansprüche

1. Verfahren zum Aufbau einer Kommunikationsverbindung zwischen einem anrufenden A-Teilnehmer und einem anzurufenden B-Teilnehmer eines Kommunikationssystems, insbesondere eines Telekommunikationsfestnetzes und/oder eines Mobilfunknetzes und/oder eines internetprotokollbasierten Computernetzwerkes oder einer Kombination dieser Netze, bei dem aus einer den anzurufenden B-Teilnehmer eindeutig identifizierenden Zeichenfolge mittels einer eindeutigen Abbildung eine Ziffernfolge ermittelt wird und eine Verbindung unter Verwendung einer aus dieser Ziffernfolge abgeleiteten Rufnummer des B-Teilnehmers aufgebaut wird, **dadurch gekennzeichnet, dass** die Abbildung eine Hash-Funktion ist, mittels der aus der Zeichenfolge die Ziffernfolge erzeugt wird, und dass die Ziffernfolge eine Basis der Rufnummer bildet, wobei die Ziffernfolge durch Hinzufügen einer internationalen und/ oder nationalen Vorwahl und/ oder einer Servicekennung zu der Rufnummer ausgebaut wird.

2. Verfahren nach Anspruch 1, **dadurch gekennzeichnet, dass** die Ermittlung der Ziffernfolge aus der Zeichenfolge mittels des Telekommunikationsendgerätes des anrufenden A-Teilnehmers erfolgt.

3. Verfahren nach Anspruch 1, **dadurch gekennzeichnet, dass** die Zeichenfolge an das Kommunikationssystem übermittelt wird und dann seitens des Kommunikationssystems die Ermittlung der Ziffernfolge aus der Zeichenfolge erfolgt, die als Basis der Rufnummer des Kommunikationspartners dient.

4. Verfahren nach Anspruch 1, **dadurch gekennzeichnet, dass** die Ermittlung der Ziffernfolge aus der Zeichenfolge mittels eines eigenständigen Zusatzgerätes erfolgt.

5. Verfahren nach einem der vorherigen Ansprüche, **dadurch gekennzeichnet, dass** die Ermittlung der Ziffernfolge als Basis der Rufnummer mittels eines Servers erfolgt, über den die Kommunikationsverbindung aufgebaut wird, insbesondere über einen Server innerhalb des Kommunikationssystems.

6. Verfahren nach einem der vorherigen Ansprüche, **dadurch gekennzeichnet, dass** es sich bei der den B-Teilnehmer eindeutig identifizierenden Zeichenfolge um den Vornamen und/oder Zunamen und/oder eine E-Mail-Adresse und/oder einen Alias handelt.

7. Verfahren nach einem der vorherigen Ansprüche, **dadurch gekennzeichnet, dass** für den Aufbau der Kommunikationsverbindung eine Kennung des A-Teilnehmers an das Kommunikationssystem übermittelt wird.

8. Verfahren nach einem der vorherigen Ansprüche, **dadurch gekennzeichnet, dass** für den Aufbau einer Telekommunikationsverbindung die Zeichenfolge per SMS, MMS, IM, E-Mail oder dergleichen an das Kommunikationssystem übermittelt wird.

9. Verfahren nach einem der vorherigen Ansprüche, **dadurch gekennzeichnet, dass** bei einem fehlgeschlagenen oder abgelehnten Verbindungsaufbau eine Mitteilung an den B-Teilnehmer übermittelt wird, insbesondere beinhaltend eine Kennung des A-Teilnehmers und/oder Anrufdatum und Anrufuhrzeit und/oder die zur Identifikation des B-Teilnehmers übermittelte Zeichenfolge, insbesondere per SMS, MMS, IM, E-Mail oder dergleichen.

10. Verfahren nach einem der vorherigen Ansprüche, **dadurch gekennzeichnet, dass** zeitliche Beschränkungen oder Vorgaben für einen Verbindungsaufbau festlegbar sind, insbesondere dass Zeiten festlegbar sind, in denen kein oder nur ein Verbindungsaufbau mit bestimmten Kennungen erfolgt und/oder dass Uhrzeit/Datum für einen erstmaligen Versuch eines Verbindungsaufbaus vorgebbar sind.

11. Verfahren nach einem der vorherigen Ansprüche, **dadurch gekennzeichnet, dass** Konferenzschaltungen mit einer beliebigen Zahl von Teilnehmern aufgebaut werden.

## Claims

1. Method for setting up a communication connection between a calling A subscriber and a B subscriber to be called in a communication system, in particular a fixed telecommunications network and/or a mobile radio network and/or an Internet-protocol-based computer network or a combination of these networks, in which a numerical sequence is determined from a character string uniquely identifying the B subscriber to be called by means of a unique representation and a connection is set up using a call number of the B subscriber derived from this numerical sequence, **characterized in that** the representation is a hash function which is used to generate the numerical sequence from the character string, and **in that** the numerical sequence forms a basis of the call number, the numerical sequence being expanded by adding an international and/or national dialling code and/or a service identifier to the call number.

2. Method according to Claim 1, **characterized in that** the numerical sequence is determined from the character string by means of the telecommunications terminal belonging to the calling A subscriber.

3. Method according to Claim 1, **characterized in that** the character string is transmitted to the communication system and the communication system then determines the numerical sequence from the character string, which is used as the basis of the call number of the communication partner.

4. Method according to Claim 1, **characterized in that** the numerical sequence is determined from the character string by means of an independent additional device.

5. Method according to one of the preceding claims, **characterized in that** the numerical sequence as the basis of the call number is determined by means of a server, via which the communication connection is set up, in particular via a server inside the communication system.

6. Method according to one of the preceding claims, **characterized in that** the character string uniquely identifying the B subscriber is the forename and/or surname and/or an email address and/or an alias.

7. Method according to one of the preceding claims, **characterized in that**, in order to set up the communication connection, an identifier of the A subscriber is transmitted to the communication system.

8. Method according to one of the preceding claims, **characterized in that**, in order to set up a telecommunications connection, the character string is transmitted to the communication system by SMS, MMS, IM, email or the like.

9. Method according to one of the preceding claims, **characterized in that**, in the event of a failed or refused connection set-up, a communication is transmitted to the B subscriber, in particular containing an identifier of the A subscriber and/or the call date and call time and/or the character string transmitted for the purpose of identifying the B subscriber, in particular by SMS, MMS, IM, email or the like.

10. Method according to one of the preceding claims, **characterized in that** time restrictions or specifications for setting up a connection can be stipulated, in particular **in that** times in which a connection is not set up or only a connection with particular identifiers is set up can be stipulated, and/or **in that** the time/date for a first attempt to set up a connection can be specified.

11. Method according to one of the preceding claims, **characterized in that** conference calls having any desired number of subscribers are set up.

## Revendications

1. Procédé pour établir une liaison de communication entre un abonné appelant A et un abonné appelé B d'un système de communication, en particulier d'un réseau de télécommunication et/ou d'un réseau radio mobile et/ou d'un réseau informatique à base de protocole internet ou d'une combinaison desdits réseaux, dans lequel, à partir d'une chaîne de caractères identifiant de façon non équivoque l'abonné appelé B, une suite de chiffres est déterminée au moyen d'une représentation non équivoque et une liaison est établie par utilisation d'un numéro d'appel de l'abonné B déduit de ladite suite de chiffres, **caractérisé en ce que** la représentation est une fonction de hachage au moyen de laquelle la suite de chiffres est générée à partir de la chaîne de caractères, et **en ce que** la série de chiffres forme une base du numéro d'appel, dans lequel la série de chiffres est prolongée par ajout au numéro d'appel d'un indicatif international et/ou national et/ou d'un identifiant de service.

2. Procédé selon la revendication 1, **caractérisé en ce que** la détermination de la série de chiffres à partir de la chaîne de caractères est effectuée au moyen du terminal de télécommunication de l'abonné appelant A.

3. Procédé selon la revendication 1, **caractérisé en ce que** la chaîne de caractères est transmise au système de communication puis **en ce que**, du côté du système de communication, la détermination de la série de chiffres est effectuée à partir de la chaîne de caractères qui est utilisée en tant que base pour le numéro d'appel du partenaire de la communication.

4. Procédé selon la revendication 1, **caractérisé en ce que** la détermination de la série de chiffres à partir de la chaîne de caractères est effectuée au moyen d'un appareil auxiliaire autonome.

5. Procédé selon l'une quelconque des revendications précédentes, **caractérisé en ce que** la détermination de la série de chiffres est effectuée sur la base du numéro d'appel au moyen d'un serveur par l'intermédiaire duquel la liaison de communication est établie, en particulier par l'intermédiaire d'un serveur se trouvant au sein du système de communication.

6. Procédé selon l'une quelconque des revendications précédentes, **caractérisé en ce que** la série de chiffres identifiant de manière non équivoque l'abonné B est le prénom et/ou le nom de famille et/ou une adresse de courrier électronique et/ou un alias.

7. Procédé selon l'une quelconque des revendications précédentes, **caractérisé en ce qu'**un identifiant de l'abonné A est transmis au système de communication pour l'établissement de la liaison de communication.

8. Procédé selon l'une quelconque des revendications précédentes, **caractérisé en ce que**, pour l'établissement d'une liaison de télécommunication, la série de chiffres est transmise au système de communication par SMS, MMS, IM, courrier électronique ou autre.

9. Procédé selon l'une quelconque des revendications précédentes, **caractérisé en ce qu'**en cas d'échec ou de refus d'établissement de la liaison, un message est transmis à l'abonné B, celui-ci contenant en particulier un identifiant de l'abonné A et/ou une date d'appel et/ou une heure d'appel et/ou la série de chiffres transmise pour l'identification de l'abonné B, en particulier par SMS, MMS, IM, courrier électronique, ou autre.

10. Procédé selon l'une quelconque des revendications précédentes, **caractérisé en ce que** des limitations ou des prescriptions temporelles peuvent être fixées pour l'établissement d'une liaison, en particulier, **en ce qu'**il est possible de fixer des temps au cours desquels aucun établissement d'appel ou un seul établissement d'appel peut être effectué avec des identifiants donnés et/ou **en ce qu'**une heure/une date peut être prédéterminée pour une tentative unique d'établissement d'une liaison.

11. Procédé selon l'une quelconque des revendications précédentes, **caractérisé en ce que** des conférences téléphoniques sont établies avec un nombre quelconque d'abonnés.
